# EUROPEAN PATENT APPLICATION

(11) **EP 3 495 990 A1**
(43) Date of publication of application: **12.06.2019**
(21) Application number: 17205761.4
(22) Date of filing: 06.12.2017
(51) Int. Cl.: G06K 9/00, G06K 9/32

(54) **SOFTWARE ARCHITECTURE FOR REAL TIME ANALYSIS OF A PLURALITY OF VIDEO STREAMS FOR VIDEO SURVEILLANCE APPLICATIONS**

(71) Applicant: Parsec 3.26 S.r.l., 73020 Cavallino, LE (IT)
(72) Inventor: DEL PRETE, Antonio, 73100 LECCE (IT); CAPALBO, Vincenzo, 73100 LECCE (IT); SCALPELLO, Bruno, 73020 CAVALLINO (IT)
(74) Representative: Conversano, Gabriele

(57) **Abstract**

Method for analysis of video flows in order to carry out facial recognition operations, comprising the steps of:
a. acquiring an image extracted by a video flow;
b. localizing, inside said image, the regions containing one or more faces;
c. cropping, inside said image, one or more regions of interest, each one containing a face individuated at point b;
d. calculating at least a biometric model of the face contained in the crop extracted at point c;
e. comparing said at least biometric model with the biometric model calculated for each image contained inside a database of images associated to personal data of a plurality of subjects, calculating for each image an evaluation index of the resemblance of the biometric model;
f. returning a list of personal data associated to images of the database for whose biometric models the highest resemblance index has been calculated with the biometric model calculated at point d.

## Description

The present Patent application relates to a method for real time analysis of a plurality of video flows coming from remote video sources for video surveillance applications, and more in particular, for facial recognition and a software architecture particularly efficient at implementing such method. In particular, the software architecture, object of the present invention, allows Computer Vision technologies and Big Data management to be efficiently and usefully integrated with real time analysis of video flows by means of photograms extraction, modification and analysis and subsequent facial recognition.

### 1. Introduction

Public spaces accessible to great flows of people, such for example: stadiums, airports, stations, schools and universities, entertainment places, government buildings etc. as well as areas with remarkable circulation of people and vehicles, require greater intelligence in safety measures and in control systems and technologies.

For this reason it is useful to make analysis technologies applied to video surveillance more widely accessible, since solutions available so far in the market relate to expensive systems, not available to many potential clients in both public and private context, who yet have the need to be provided with technologies able to guarantee safety of places.

Therefore, there is the need to develop a solution which is cheap and performing at the same time, in order to be competitive with other facial recognition solutions currently known at the state of the art. The solution, object of the present invention, has been developed with the aim of being able to satisfy, in time intervals under 15 seconds, up to 10 requests of "facial recognition" at the same time, by analyzing by comparison data contained in a database containing up to 10,000,000 images.

### 2. Facial recognition

As yet said, the solution, object of the present invention, implements a software architecture which allows to carry out facial recognition operations from video flows in an efficient and convenient manner.

Generally, for facial recognition it is intended the operation of images analysis which, starting from the image of a face acquired by a video-camera or a camera, allows to individuate the images which resemble the most the one subjected to analysis among images of faces contained in one or more database and associated to a plurality of subjects. The facial recognition method according to the invention, functions according to the following steps:
a. Acquisition: the acquisition of the image to be analyzed can occur by means of the input of the image by the user interacting with the Enterprise System. The image in input can be provided in the most diffused formats (ipg, tif, bmp, png, gif). The output of this process is an image of the same format as the one in input.
d. Detection: at the end of the image uploading procedure, the system carries out the localization, inside the image, of one or more faces present in the image in input, by means of one or more face individuation algorithms among those known and available in the market.

Preferably, in case more faces are individuated in the image, the method provides that the user chooses the face (or faces) on which the facial recognition operations are to be carried out.

The output of this step is the crop of the image coming form step a, containing only an extended portion of the selected face. In case the face individuation process fails (for example because the automatic algorithm fails to find the correct distance between pupils in the image), the method provides that the user can force manually the recognition or can discard the image definitely. c. Pre-processing: in this step the operator can carry out one or more normalization processes, before the images are processed by the recognition algorithms. In the pre-processing step lighting variations of the acquired images are carried out, thus modifying contrast and reducing noise in order to improve image quality. The aim of the normalization operations is to bring out details of acquired images by highlighting features of interest so as to be able to guarantee facial recognition performance improvement.

Other normalization operations carried out in this step comprise the identification of the region of interest (Region of Interest) and the rotation of photogram on horizontal plane (Perspective transformation). The output of this step contains another crop of the image coming from the previous process, optimized on the basis of ROI and of rotation of photogram according to the effective face geometry inside the original image.
d. Recognition: in this step the effective facial recognition is carried out. In this step the program implementing the method has access to one or more databases containing images of known subjects, with which the acquired image is to be compared for recognition. In this step there is carried out:
   d.1: The calculation of a biometric model of the image to be analyzed, according to one or more algorithms for biometric models calculation, known at the state of the art,
   d.2: the comparison between the calculated biometric model and the same models calculated for the images present in the databases. Possibly, in order to optimize the method rapidity of execution, it will be possible that the user indicates a subset (categorization) of the database on which the research has to be carried out. Such subset can be individuated by specifying filters on the basis of personal and/or descriptive structured data.

In this step the program implementing the method will give the possibility to carry out the research by means of one or more embedded facial recognition algorithms, according to various configurations (standard, manual and automatic combined research):
- Standard Research: the system will use a standard recognition algorithm. The implementation of the method with standard research allows to respect target answer times indicated in the introduction.
- Combined Research - Manual: the system enables the operator to manually select one or more recognition algorithms to be executed, among the available ones. The system will evaluate the results coming from the selected algorithms, by giving back a list of faces similar to the one object of the analysis and sorted on the basis of a score indicating the resemblance rating for each algorithm. Preferably, these results are shown to the operator by means of a structured graphic interface which makes the evaluation of the returned results easier.
- Combined Research - Automatic: the system compares in parallel the results coming from all the facial recognition algorithms available, by giving back a list of faces similar to the one object of the analysis and sorted on the basis of a score indicating the resemblance rating for each algorithm. Also in this case, the operator will have at disposal a structured graphic interface which makes the evaluation of the returned results easier.

Since recognition operations are to be carried out by means of a plurality of algorithms, the implementation of these last two methods could not allow to respect the target answer times indicated in the introduction.

In each case, the research result will contain a list of candidates, visualized in decreasing order of resemblance to the face searched for. Moreover, since one and the same subject can be photo-signalized more times, it is possible that many records of the research database are linked by only one Unique Identifier Code (CUI). The images of candidates will be then clustered by CUI belonging and of each cluster only the image with the highest resemblance rating will be visualized.
e. Report and notifications: the detail of all the subjects detected is saved in the database in order to carry out statistics and to carry out off-line controls.

### 3. Infrastructure

The software architecture, object of the present invention, implements the just described method so that it is available for a plurality of users.

A solution of Enterprise type has to be performing and configured with high availability, wherein High Availability (HA) relates to the presence of redundant elements. Therefore, a software architecture, described in detail in the following, has been developed and implemented, in which clustering technique and virtualization technologies are combined so that practicability, flexibility and IT scalability are increased, by rationalizing the hardware and software architecture. Other advantages of the solution are:
- Inexpensiveness: the choice of usable engines is carried out on the basis of computational cheapness, so a considerable saving on hardware elements;
- scalability, since resources are distributed;
- upgrading and maintenance easiness;
- taking advantage of collaboration to solve complex problems;
- reliability, since the system continues to function also in case of failure of portions thereof, thus guaranteeing performance;
- compensation of the applications load on virtual clusters.

### 4. Description of the implemented solution

As yet said, at the state of the art commercial solutions are known which provide the same kind of service with high performances as well, but with very high costs. Therefore, the adopted architecture solution has been conceived to be innovative with respect to the current commercial scenario, and in particular it has been thought to allow integration and usage of many solutions, commercial as well, coming from third parties for analysis of digital contents (images to be analyzed), in particular with reference to algorithms usable for image analysis and for facial recognition. Anyway, there is no technically "better" solution than the other ones in all the possible usage conditions in which the system could be used.

For this reason the implemented system has an architecture solution which allows to use a plurality of algorithms, coming from third parties as well, in sequence or at the same time, so as to improve the intended performance with respect to the defined specifics.

Such peculiarity makes it particularly interesting since it allows a strong customization and in the following also the usage of image analysis solutions other than the ones available at the system acquisition.

The preferred embodiment of the software infrastructure is described in the following.

### 4.1 Software Infrastructure

The reference technology infrastructure is Java 2 Enterprise Edition (J2EE), which allows to develop simply a scalable, robust, safe and with high performance system, with a simplified support to web services.

J2EE platform provides tools for designing and implementing web oriented applications (Servlet, EJB, JSP, Web Service) suitable for an enterprise environment and guarantees full interoperability with a wide range of server, development tools and open source components. The independence feature with respect to the application platform allows an easy scalability both in terms of performance and in terms of deployment environments.

The logical architecture of the system is based on the principle "separation of concerns" which determines the separation of components (layers), responsible for presentation, communication with outer systems, management of accesses, business logic and data persistence. Each one of these components is described in the following.

In this way, the dependences between each layer are made explicit (avoiding that modifications of a layer affect also the following ones) and improved results are guaranteed in terms of flexibility and efficiency in the application development. Finally, this approach makes the possibility of an application maintenance easier and guarantees a high safety level, since it allows the access to business classes only through the Controller.

In the following, the responsibilities of the various layers (logical clusters of correlated components) are summed up. From the logical point of view, the proposed architecture provides a series of freedom degrees for the subdivision of an application in layers, assigning suitably responsibilities to each one of them:
- presentation layer: responsible for management of user interface, user interactions, surfing from page to page and for calling the business services provided by the application layer.
- business layer: it comprises business logics which regulate the whole application functioning (comprising indexing and research); it intercepts, by means of integration components, requests coming from the presentation layer and manages them suitably. Finally, this level is responsible for present data analysis and processing, for preparation and formatting of data towards the presentation layer, for logging and requests management forwarded to various architecture functional modules.

- Data management layer: responsible for management of data needed for the whole system functioning. Data reside on the basis of relational data managed by DBMS (management of data persistence which makes the application independent of DBMS).
- "Security and Identity Management" of the application system: its components can cross all levels, and are responsible for authorization and access management to single system components, for user management (with roles and profiles management).

### 4.2 Presentation layer

All the Application System functions are implemented on a web application developed by means of Spring MVC framework. Spring MVC is a framework to realize web applications based on MVC model by using the strengths provided by Spring framework as the "inversion of control" (by means of "dependency injection") and the "aspect oriented programming". It maps methods and Java classes with certain urls, manages various types of "views" returned to client, realizes internationalized applications and manages so called themes for customization user experience at the most. With reference to MVC model, inside a Spring MVC application:
- Models are represented by classes which in turn represent the managed objects and the access classes to database;
- Views are represented by various JSP files (which are written in (X)HTML) and by possible classes for exporting in formats other than HTML (PDF, XLS, CSV etc.);
- Controllers are represented by classes (suitably called Controller) which remain "listening" on a certain URL, and thanks to models and views, they manage the user request.

Spring MVC provides many other advantages in addition to the strict separation among functions:
- it is adaptable, flexible and not intrusive thanks to the presence of comfortable and clear "Java annotations";
- it allows to write a reusable code;
- possibility to be extended by means of adapters and validators written ad hoc for our needs;
- dynamic, SEO-friendly and customizable urls;
- internationalization and themes integrated management;
- JSP library developed ad hoc to make some repetitive operations easier.

### 4.3 Business Layer

In this architecture level four groups of components can be identified:
- Indexing & Search Engine: containing all the components responsible for template indexing (numerical vectors, associated to images, obtained according to a specific algorithm of the recognition system), post step "recognition", and for research, in facial recognition step inside images.
- SOA Components: it contains all the components responsible for business processes integration, which presume various system functions (enrollment, search, console management and audit, etc.) with outer systems (Bulk processing from AFIS, outer repositories etc.).
- Application Components: it contains all the components responsible for business logics which regulate the whole application functioning, which intercept by means of the integration components requests coming from presentation layer and manage them suitably. Finally, these components are responsible for present data analysis and processing, preparation and formatting of data towards presentation layer, for logging and requests management forwarded to various architecture functional modules.
- Engine Pipeline Components: it contains all the components responsible for steps from image acquisition to calculation of template, associated to the image (acquisition, face detection & tracking, pre-processing, template extraction).

The following sub-sections describe in more detail the main components of the four clusters of business level.

### 4.3.1 Indexing & Search Engine:

Among design specifics it is considered that the solution, object of development, has to be able to satisfy in rapid times (< 15 seconds) requests (10) of "facial recognition" in a considerable quantity of images (10,000,000) at the same time.

For this cases of usage it is necessarily needed to provide a powerful indexing/research engine. In the present invention, for the research problems, "ElasticSearch" has been used. ElasticSearch is a distributed search engine, used for full-text search research and analysis on data. For example, Wikipedia uses Elastisearch to carry out the instant research of articles and to provide corresponding suggestions, while GitHub uses it for researching the code and Stack Overflow for research and to show correlated questions. ElasticSearch is an open source software, written in Java and based on "Apache Lucene", a Java library which implements "full-text search" research in a very efficient manner.

In the context of the present invention ElasticSearch is used to index "templates" associated to face images, on which a subsequent efficient research can be applied, useful for the functioning of automatic recognition algorithms.

### 4.3.2 SOA Components

The data and information automatic interchange also with possible outer applications and systems is one of the features desired for the system. This allows the Application system to interoperate/integrate with third information systems (outer databases etc.).

In line with national and international guidelines relating thereto and following innovative trends from the point of view of interoperability, reuse and transparence for application collaboration and data interchange, this result is guaranteed realizing an architecture based on SOA paradigm (Service Oriented Architecture). A SOA architecture identifies a software architecture able to supply web services to allow heterogeneous systems to interact with one another in an integrated and transparent manner. The SOA realization is based on the exposition of Web Service REST or SOAP which provide the outer systems with API for access to Recò functions.

The "Spring" framework used for the system implementation provides aim-specific libraries. It is also provided a "batch component" needed for scheduling data alignment jobs (images, information associated to images and template calculation) also from outer database.

For implementing the job scheduler, the open source library "Quartz Enterprise Job Scheduler" [3] is used, which can be integrated in any Java application to carry out tens of thousands of jobs. The job tasks are defined as Java standard components able to carry out any type of operation. Quartz comprises many functions of enterprise class, as for example the support to JTA transactions and clustering.

### 4.3.3 Applications Components

The main business components are:
- business component: the application system requires components which implement the business rules and carry out business task. The business components are implemented with java programming language using "Spring MVC" framework.
- business entity: for management of business components interaction with data persistence status.
- auditing and logging: the application logging at business layer provides the usage of the consolidated open source library "Apache log4j" [4], by means of which it is possible to set declaratively (without impacts on the developed code) various logging levels: TRACE, DEBUG, INFO, ERROR and FATAL. The maximum traceability level (TRACE) records all the operations carried out in the application code, while the minimum level (FATAL) allows to trace only irreversible errors and system crashes.

For tracing tasks, in order to re-build events and consequent responsibilities on personal/sensible data treatments, the system maintains a log of the various entities which access to the system and of the tasks carried out (such for example writing, upgrading and deletion of treated data). In fact, the system has to be provided with a sophisticated management of historical information, which allows to re-build history of modifications relating to information about a certain concept entity. Therefore the logging system will allow to keep trace of the user who carries out the data treatment operation, of the date and time when the operation is occurred, of the type of operation (writing, upgrading and deletion).

### 4.3.4 Engine Pipeline Components

They represent engines containing all components responsible for "face recognition process", for face recognition inside the images. Components responsible, in particular, for all those steps from image acquisition to template calculation (biometric model) associated to the image (acquisition, face detection % tracking, pre-processing, template extraction).

In other terms, from "Face recognition process" pipeline managed by these components, only the "matching" step remains excluded, because referred explicitly to "plugins" of ElasticSearch in cluster, used for this specific aim.

Is to be highlighted here that, by virtue of the system architecture modularity, it is possible to implement a plurality of engines by carrying out for each instance one or more thereof, without this decision has effect on the other system components.

### 4.4. Data Management Layer

The components of this level allow the data persistence management, which are needed for the whole Application System functioning, and which reside on the basis of relational data.

The persistence management is a delicate subject in designing software applications. The development of Object-oriented applications which use a relational DBMS to store data in secondary memory is a very common scenario. What makes the building of the persistence layer complex is the "object/relational impedance mismatch" problem, the difference between the Object-oriented paradigm and the relational paradigm.

This problem is caused by the fact that the Object-oriented paradigm is based on software engineering principles while the relational paradigm is based on mathematical principles. The design and realization of dominium classes and of the basis of data show this difference: the dominium classes are designed with UML, an Object-oriented modeling language, while the basis of data is initially designed by using the relation-entity model to create a conceptual scheme which in the following is weakened to allow the translation of the scheme in the relational model of the basis of data.

The "impedance mismatch" problem is analyzed and solved in suitable manner in the designing step, by adopting "Object-relational Mapping (ORM)". This technique consists in mapping dominium classes of the application on the basis of relational data. The primary form of data access in Java is undoubtedly JDBC, an API created to make the interaction with RDBMS platform-independent. Its usage provides remarkable advantages in terms of performance and usage easiness, asking the developer instead to deal with the whole management of data access processes, i.e.:
- request of connection to "datasource"
- creation of "PreparedStatement" and parameters valorization
- "preparedStatemet" execution
- extraction of results from "ResultSet" (in case of queries)
- exceptions management
- connection closing

But over the years, suitable frameworks have been created which by extracting JDBC, tend to simplify these aspects. In this context "Spring JDBC" [2] is found, which is used for implementation of the system, object of the present invention, which provides various possibilities for data persistence by means of JDBC, the main one of which is the usage of "JDBCTemplate" class, able to implement the whole process of access to data by means of "template methods", thus making the customization of all the steps of such process possible by means of specific methods override.

### 4.5 Security & Identity Management

The components, defining the "Security and Identity Management" infrastructure, manage a wide area of application functions linked to the users digital identity management. The main functions relating to this layer are:
- authentication: by means of username and password;
- confidentiality: capacity of the system to avoid that a third party intercepts and exploits data which are received or transmitted at the moment;
- authorization: limiting access to private information or allowing access to specific services;
- data integrity: to be sure that nobody intercepts data exchanged, it can be important to know that nobody has altered them during transmission;
- user provisioning: allocation and revocation of user privileges and profiles.

To realize the "Security and Identity Management" infrastructure for the application system of the invention it is used "Spring Security". "Spring Security" is a powerful and highly customable framework of authentication and access control, considered de *facto* standard for the protection of the applications based on Spring. "Spring Security" supports all the most known mechanisms of "authentication": HTTP basic, HTTP digest, HTTP x.509 (certificates exchange), on database, LDAP, NTLM, OpenID, Kerberos, SSO, as JA-SIG CAS etc.

One of the control systems supported by "Spring Security" and which is adopted for implementing the application system of the invention, is based on RBAC model (Role based access control) which allows the association of the couple Role-grant to the single resource. According to this model, all accesses do not occur on the basis of the single people identity but by means of the role which a user has in the organization. A grant represents the right of a user or a group of users to read-only or read/write access to a function of the system. Since a user can carry out more roles at the same time inside a service, the administrator can define "groups" of roles to be assigned to the users.

## Claims

1. Method for analysis of video flows in order to carry out facial recognition operations, comprising the steps of:
a. acquiring an image extracted by a video flow;
b. localizing, inside said image, the regions containing one or more faces;
c. cropping, inside said image, one or more regions of interest, each one containing a face individuated at point b;
d. calculating at least a biometric model of the face contained in the crop extracted at point c;
e. comparing said at least biometric model with the biometric model calculated for each image contained inside a database of images associated to personal data of a plurality of subjects, calculating for each image an evaluation index of the resemblance of the biometric model;
f. returning a list of personal data associated to images of the database for whose biometric models the highest resemblance index has been calculated with the biometric model calculated at point d.

2. Computer program implementing a method for analysis of video flows according to claim 1, **characterized in that** said program comprises:
- a presentation layer, configured for management of user interface, user interactions, surfing from page to page and for calling the business services provided by the application layer;
- a business layer in which there are implemented present data business and processing logics, preparation and formatting of data towards the presentation layer;
- a data management layer configured for management of data needed for the whole system functioning.
- a "Security and Identity Management" layer in which there are implemented authorization and access logics to single system components by all users.

3. Computer program implementing a method for analysis of video flows according to claim 2, **characterized in that** said presentation layer is implemented on a web application developed by means of Spring MVC framework.

4. Computer program implementing a method for analysis of video flows according to claim 3, **characterized in that** said business layer comprises:
- a component (Indexing & Search Engine) comprising all the components responsible for indexing biometric models (numerical vectors, associated to images, obtained according to a specific algorithm of the recognition system), post step "recognition", and for research, in facial recognition step inside images;
- a component (SOA) comprising all the components responsible for business processes integration, which presume various system functions (enrollment, search, console management and audit, etc.) with outer systems (Bulk processing from AFIS, outer repositories etc.);
- a component (Application Components) comprising all the components responsible for business logics which regulate the whole application functioning;
- a component (Engine Pipeline Components) comprising all the components responsible for steps from image acquisition to calculation of biometric model, associated to the image.

5. Computer program implementing a method for analysis of video flows according to claim 4, **characterized in that** said Engine Pipeline Components uses ElasticSearch, a distributed search engine.

6. Computer program according to any one of the preceding claims, **characterized in that** in said Indexing & Search Engine there are implemented a plurality of facial recognition algorithms and **in that** said computer program allows the user to choose among the following research modes:
- Standard Research, in which only one predetermined facial recognition algorithm is used;
- Combined Research - Manual, in which the user is asked to manually select one or more recognition algorithms to be executed, among the available ones;
- Combined Research - Automatic, in which all the facial recognition algorithms available are executed.

7. Computer program according to any one of the preceding claims, further comprising a structured graphic interface which makes the evaluation of the returned results easier.
